# EUROPEAN PATENT APPLICATION

(11) **EP 3 792 996 A1**
(43) Date of publication of application: **17.03.2021**
(21) Application number: 19800482.2
(22) Date of filing: 24.04.2019
(51) Int. Cl.: H01M 2/20, H01M 2/10

(54) **POWER STORAGE DEVICE**

(30) Priority: 09.05.2018 JP 2018090914; 09.05.2018 JP 2018090915
(71) Applicant: GS Yuasa International Ltd., Kisshoin, Minami-ku, Kyoto-shi, Kyoto 601-8520 (JP)
(72) Inventor: TSURUTA, Shogo, Kyoto-shi, Kyoto 601-8520 (JP); TONONISHI, Masamitsu, Kyoto-shi, Kyoto 601-8520 (JP); WADA, Akira, Kyoto-shi, Kyoto 601-8520 (JP); NAKAHATA, Takuya, Kyoto-shi, Kyoto 601-8520 (JP)
(74) Representative: Grünecker Patent- und Rechtsanwälte PartG mbB
(86) International application number: PCT/JP2019/017390
(87) International publication number: WO 2019/216218

(57) **Abstract**

An energy storage apparatus (10) includes an energy storage device (21) having terminals (27, 28), a bus bar (33A) connected to the terminals (27, 28), and a circuit board (78) electrically connected to the bus bar (33A). The bus bar (33A) has a bus bar body (36) fixed to the terminals (27, 28), a protruding portion (39) protruding from the bus bar body (36), and a board connecting part (49) protruding from the protruding portion (39) and fixed to the circuit board (78). A lateral width (W1) of the board connecting part (49) is narrower than a lateral width (W3) of the protruding portion (39). At a base end of the board connecting part (49), a seat (50) is formed whose lateral width is gradually narrowed from the protruding portion (39) toward a tip end of the board connecting part (49).

## Description

### TECHNICAL FIELD

The present invention relates to an energy storage apparatus.

### BACKGROUND ART

Patent Document 1 discloses an energy storage apparatus provided with a circuit board including a monitoring circuit that monitors a voltage of an energy storage device. The energy storage device and the monitoring circuit are electrically connected by a bus bar that electrically connects a plurality of energy storage devices. The bus bar includes a bus bar body joined to a terminal of the energy storage device by welding, and a board connecting part connected to the monitoring circuit of the circuit board by soldering. The board connecting part is provided at a tip end of a protruding portion protruding from the bus bar body.

### PRIOR ART DOCUMENTS

### PATENT DOCUMENTS

Patent Document 1: JP-B2-5284053
Patent Document 2: WO 2011/52699 A

### SUMMARY OF THE INVENTION

### PROBLEMS TO BE SOLVED BY THE INVENTION

In the energy storage apparatus of Patent Document 1, stress concentrates on a base end side of the board connecting part when vibration and impact are applied. Since the board connecting part is thinner than the protruding portion and has low rigidity, stress concentration may cause breakage. A solder portion connecting the board connecting part and the circuit board may be damaged (cracked) due to stress concentration. In these cases, a defect occurs in electric conduction between the energy storage device and the circuit board.

An object of the present invention is to provide an energy storage apparatus capable of effectively suppressing breakage of a board connecting part and damage of a solder portion due to application of vibration and impact.

### MEANS FOR SOLVING THE PROBLEMS

One aspect of the present invention provides an energy storage apparatus including: an energy storage device having a terminal; a bus bar connected to the terminal; and a circuit board electrically connected to the bus bar. The bus bar includes: a bus bar body fixed to the terminal; a protruding portion protruding from the bus bar body; and a board connecting part protruding from the protruding portion and fixed to the circuit board. A lateral width of the board connecting part in a lateral direction orthogonal to a protruding direction of the board connecting part is narrower than a lateral width of the protruding portion in the lateral direction. At a base end of the board connecting part located on a side of the protruding portion, there is formed a seat having a lateral width gradually narrowed from the protruding portion toward a tip end of the board connecting part.

### ADVANTAGES OF THE INVENTION

In the energy storage apparatus of the present invention, since the seat whose lateral width is gradually narrowed from the protruding portion side to a tip-end side is formed in the board connecting part, it is possible to suppress breakage of the board connecting part, damage of the solder portion, or the like.

### BRIEF DESCRIPTION OF THE DRAWINGS

Fig. 1 is an exploded perspective view of an energy storage apparatus according to an embodiment of the present invention.
Fig. 2 is a perspective view showing configurations of a bus bar and a circuit board.
Fig. 3 is a perspective view showing an assembled state of an energy storage device, an inner lid, and the circuit board.
Fig. 4 is a perspective view showing the inner lid and the bus bar.
Fig. 5 is a perspective view of a first bus bar.
Fig. 6 is a cross-sectional view showing a soldered portion of Fig. 3.
Fig. 7 is a perspective view of a second bus bar.
Fig. 8 is a perspective view of a third bus bar.
Fig. 9 is a cross-sectional view showing a board connecting part and a solder portion according to Modified example 1 of the embodiment.
Fig. 10 is a cross-sectional view showing a board connecting part and a solder portion according to Modified example 2 of the embodiment.

### MODE FOR CARRYING OUT THE INVENTION

One aspect of the present invention provides an energy storage apparatus including: an energy storage device having a terminal; a bus bar connected to the terminal; and a circuit board electrically connected to the bus bar. The bus bar includes: a bus bar body fixed to the terminal; a protruding portion protruding from the bus bar body; and a board connecting part protruding from the protruding portion and fixed to the circuit board. A lateral width of the board connecting part in a lateral direction orthogonal to a protruding direction of the board connecting part is narrower than a lateral width of the protruding portion in the lateral direction. At a base end of the board connecting part located on a side of the protruding portion, there is formed a seat having a lateral width gradually narrowed from the protruding portion toward a tip end of the board connecting part.

According to this energy storage apparatus, since a lateral width of the board connecting part is narrower than a lateral width of the protruding portion, it is possible to improve thermal conductivity of the board connecting part at a time of soldering and ensure electrical conductivity of the protruding portion at a time of use. Since the seat whose lateral width is gradually narrowed toward the tip end is formed in the board connecting part, rigidity of the base end of the board connecting part can be increased. Therefore, it is possible to suppress breakage of the board connecting part, damage of the solder portion, or the like due to stress concentration on the base end portion of the board connecting part. At a time of manufacturing, the seat can suppress excessive insertion of the board connecting part into the circuit board, and can also suppress flow-down of molten solder.

The suppression of the flow-down of the molten solder will be described in detail. Flowability of the solder on a surface of the board connecting part is good when a temperature is higher than a temperature determined according to a type of solder, but is poor when the temperature is lower than the determined temperature. When the board connecting part is soldered to the circuit board, a tip-end side of the board connecting part is heated. Therefore, the temperature gradually decreases from the tip end to the base end. Moreover, in the seat of the board connecting part, a lateral width becomes gradually wider toward the protruding portion, so that a decreasing gradient of the temperature becomes steep. That is, in the seat of the board connecting part, the temperature on the tip-end side is likely to be higher than the determined temperature, but the temperature on the protruding portion side is unlikely to be higher than the determined temperature. Since the lateral width of the protruding portion is wider than that of the seat, the temperature does not become higher than the determined temperature. Therefore, it is possible to suppress flowing of the molten solder to the protruding portion. As a result, it is possible to prevent unnecessary flow-down of the solder, and to properly join the board connecting part and the circuit board with an appropriate amount of solder.

There is provided a solder portion fixing the circuit board and the board connecting part. The solder portion is provided from one surface to another surface of the circuit board through a connection hole of the circuit board in which the board connecting part penetrates, and the solder portion covers at least a part of the seat. According to this aspect, since the seat of the board connecting part can be reinforced by the solder portion, breakage at the seat can be effectively suppressed.

The protruding portion includes: a first portion located on the bus bar body side; a second portion located on the board connecting part side; and a curved portion that causes the second portion to protrude in a direction intersecting a surface of the first portion. The first portion and the bus bar body are formed in the same plane, and the second portion and the board connecting part are formed in the same plane. The fact that the first portion of the protruding portion and the bus bar body are formed in the same plane also includes a state where the bus bar body and the protruding portion are slightly distorted (curved) due to welding of the bus bar body to a terminal of the energy storage device. According to this aspect, electrical resistance due to the protruding portion can be minimized. It is possible to prevent an increase of a total height of the energy storage apparatus.

There is provided an inner lid arranged on a side of a terminal surface where the terminal of the energy storage device is located, and the first portion of the protruding portion includes a fixed portion that is fixed to the inner lid. According to this aspect, it is possible to suppress transmission of vibration from the fixed portion to the board connecting part side. Therefore, breakage of the board connecting part and damage of the solder portion can be effectively suppressed.

The energy storage device includes a prismatic case having a pair of long side surfaces facing each other, and a pair of short side surfaces facing each other and extending in a direction intersecting the long side surfaces. The board connecting part and the long side surfaces are arranged in parallel. According to this aspect, even if the energy storage device expands due to an unintended defect, displacement of the bus bar body can be absorbed by the curved portion. Therefore, a load applied to the board connecting part can be suppressed.

Conventionally, there is known an energy storage apparatus including: a plurality of energy storage devices; a plurality of bus bars respectively connected to terminals of the energy storage devices; and a circuit board that is electrically connected to the bus bar and detects a voltage of the energy storage device via the bus bar. In this energy storage apparatus, when vibration is transmitted from the energy storage device to the bus bar, and the soldered portion of the board connecting part of the bus bar and the circuit board is damaged, a defect occurs in conduction between the energy storage device and the circuit board.

The Patent Document 2 described above discloses an energy storage apparatus in which a resin case holding a bus bar is provided with a groove into which a board connecting part of the bus bar is inserted.

In the energy storage apparatus of Patent Document 2, since the board connecting part of the bus bar is simply inserted into the groove of the resin case, movement of the bus bar with respect to the resin case cannot be sufficiently suppressed. Therefore, in the energy storage apparatus of Patent Document 1, there is room for improvement in suppressing damage to the soldered portion of the board connecting part of the bus bar and the circuit board due to vibration.

A second object of the present invention is to provide an energy storage apparatus capable of effectively suppressing damage to a board connecting part of a bus bar and a soldered portion of a circuit board.

In the energy storage apparatus according to one aspect of the present invention, a plurality of the energy storage devices are arranged to allow the terminals to be located on the same plane, and the energy storage apparatus further includes an inner lid arranged on a side of a surface where the terminals of the plurality of energy storage devices are located. A plurality of the bus bars are arranged to be individually connected to the terminals of the plurality of energy storage devices. The circuit board is electrically connected to at least one of the plurality of the bus bars. The at least one of the plurality of bus bars has: a flexible portion that is continuous with the bus bar body and is elastically deformable; and a fixed portion that is continuous with the flexible portion and is fixed to the inner lid. The board connecting part is continuous with the fixed portion and is fixed and electrically connected to the circuit board,.

According to this energy storage apparatus, since the flexible portion and the fixed portion are provided between the bus bar body and the board connecting part, vibration transmitted from the energy storage device to the bus bar can be absorbed by the flexible portion, and transmission from the fixed portion to the board connecting part can be suppressed. Therefore, it is possible to effectively suppress damage to the soldered portion of the board connecting part and the circuit board. Deformation of the flexible portion can also effectively suppress damage to a connection part between the bus bar body and the terminal of the energy storage device. As a result, it is possible to effectively suppress an occurrence of defects in electrical connection between the energy storage device and the circuit board and electrical connection between the energy storage devices.

The bus bar body, the flexible portion, the fixed portion, and the board connecting part are integrally formed of the same material, and the bus bar body, the flexible portion, and the fixed portion are formed in the same plane. Here, being formed in the same plane also includes a state where the bus bar body, the flexible portion, and the fixed portion are slightly distorted (curved) by welding the bus bar body to the terminal of the energy storage device and fixing the fixed portion to the inner lid. According to this aspect, vibration can be effectively absorbed by the flexible portion, and the electrical resistance of the flexible portion can be minimized. It is possible to prevent an increase of a total height of the energy storage apparatus.

The flexible portion and the fixed portion are adjacent to the bus bar body in a direction intersecting an arrangement direction of the energy storage devices, and are aligned in the arrangement direction. Further, between the flexible portion and the fixed portion, a slit extending in a direction away from the bus bar body is formed. According to this aspect, elasticity can be effectively given to the flexible portion adjacent to the fixed portion. It is possible to secure electrical connection between the energy storage device and the circuit board while preventing the bus bar itself from increasing in size.

The board connecting part protrudes in a direction intersecting a surface of the fixed portion. According to this aspect, a load on the soldered portion of the board connecting part and the circuit board can be minimized, so that damage to the soldered portion can be effectively suppressed.

The fixed portion is provided with a locking hole, and the inner lid is provided with a locking protrusion that is locked in the locking hole. According to this aspect, workability of assembling the fixed portion to the inner lid can be improved, and the fixed portion can be effectively fixed to the inner lid.

The energy storage device has a prismatic case in which the terminal is arranged on one surface, a gas release valve is provided on the one surface of the case, and the flexible portion protrudes, with respect to the bus bar body, in a direction away from the gas release valve. According to this aspect, when high temperature vent gas is ejected from the gas release valve of the case due to an unintended abnormality, it is possible to suppress an influence of the vent gas on the flexible portion, the fixed portion, and the board connecting part.

Hereinafter, an embodiment of the present invention will be described with reference to the drawings.

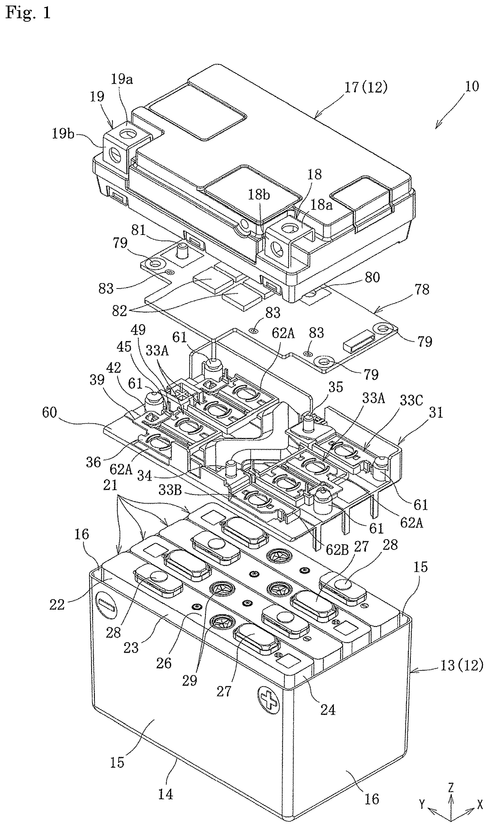

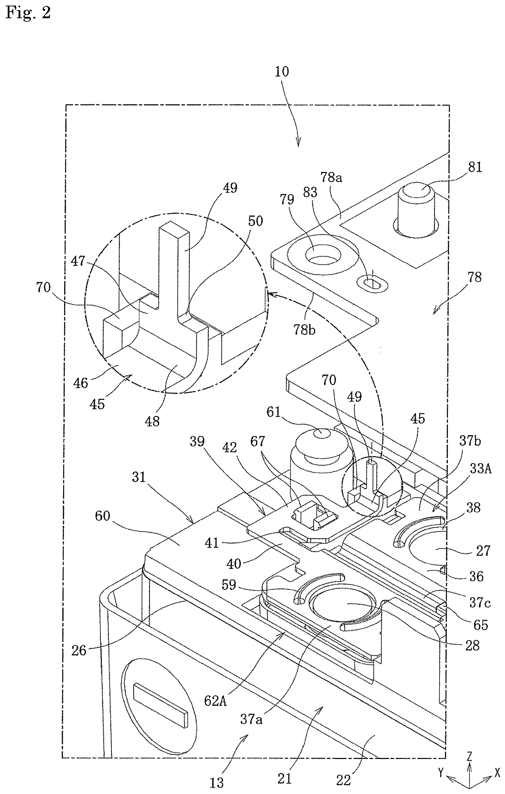

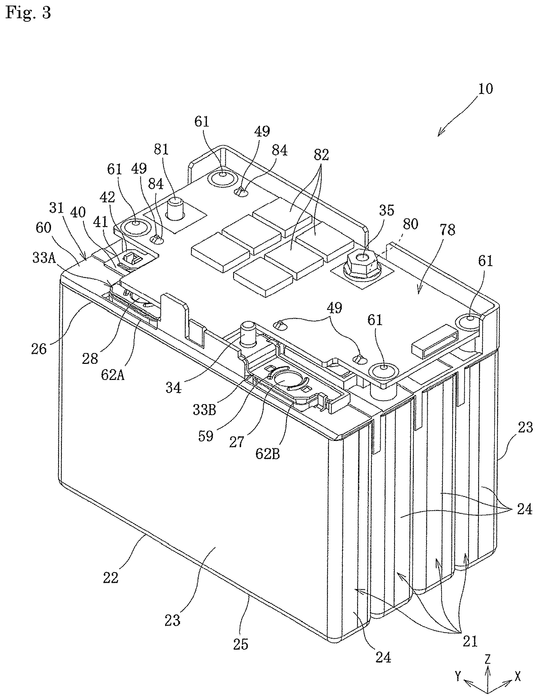

Figs. 1 and 2 show an energy storage apparatus 10 according to an embodiment of the present invention. This energy storage apparatus 10 has a configuration in which a plurality of (four in the present embodiment) battery cells (energy storage devices) 21, a bus bar unit 31, and a circuit board 78 are accommodated inside an outer case 12. Referring to Fig. 3, bus bars 33A to 33C of the bus bar unit 31 are mechanically and electrically connected to the circuit board 78 by soldering (a solder portion 84). In the present embodiment, damage of this soldered portion is effectively suppressed.

In the following description, a short-side direction of the battery cells 21, which is an arrangement direction of the battery cells 21, may be referred to as an X direction. Along-side direction of the battery cell 21 may be referred to as a Y direction, and a height direction of the battery cell 21 may be referred to as a Z direction. In each direction, an origin side of an arrow may be referred to as "one side", and a tip-end side of the arrow may be referred to as "another side". The energy storage apparatus 10 of the present embodiment has a rectangular parallelepiped shape whose dimension in the X direction is shorter than that in the Y direction, but these dimensions vary depending on a shape and number of the battery cells 21 to be accommodated.

### (Outline of energy storage apparatus)

As shown in Fig. 1, the outer case 12 is made of resin, and includes a main body 13 having one surface (an upper surface in the Z direction) opened, and a lid body 17 closing the opening of the main body 13. The main body 13 and the lid body 17 are air-tightly and liquid-tightly fixed by an adhesive, welding, or the like.

The main body 13 includes a substantially rectangular bottom wall 14. At both ends of the bottom wall 14 in the X direction, a pair of end walls 15 located outward in the arrangement direction of the battery cells 21 are individually erected. On both sides of the bottom wall 14 in the Y direction, a pair of side walls 16 located outward in a direction intersecting the arrangement direction of the battery cells 21 are individually erected.

The lid body 17 is provided with a positive electrode external terminal 18 on one side in the Y direction and a negative electrode external terminal 19 on another side in the Y direction. In the present embodiment, the external terminals 18 and 19 are arranged at corners of the lid body 17, which are on respective end portion sides in the X direction and the Y direction. These external terminals 18 and 19 include first connecting parts 18a and 19a extending along an upper surface (an XY plane) of the lid body 17, and second connecting parts 18b and 19b extending along an end surface (a YZ plane) of the lid body 17. The external terminals 18 and 19 are partially insert-molded inside the lid body 17, and a portion that is not insert-molded is exposed on a surface of the lid body 17. The portion where the external terminals 18 and 19 are insert-molded in the lid body 17 is electrically connected to the circuit board 78 or the bus bar 33 inside the energy storage apparatus 10.

As shown in Figs. 1 to 3, the plurality of battery cells 21 are arranged in the X direction so that terminals 27 and 28 are located on the same plane and long side surfaces 23 face each other, and the plurality of battery cells 21 are accommodated in the outer case 12. Electrical insulation between adjacent battery cells 21 is performed by an insulating member arranged on an outer periphery of each battery cell 21.

As the battery cell 21, a nonaqueous electrolyte secondary battery such as a lithium ion battery is used. However, other than the lithium ion battery, various battery cells 21 including a capacitor can also be applied. Each battery cell 21 includes a metal case 22. This case 22 internally accommodates an electrode assembly in which positive electrode and negative electrode sheets are stacked via a separator, positive electrode and negative electrode current collectors, and an electrolyte solution.

As most clearly shown in Fig. 3, the case 22 is prismatic, and includes a pair of long side surfaces 23 extending along the YZ plane and facing each other, and a pair of short side surfaces 24 extending along an XZ plane and facing each other. A dimension of the short side surface 24 in the X direction is shorter than a dimension of the long side surface 23 in the Y direction. The case 22 extends along the XY plane and includes a bottom surface 25 and a terminal surface (a lid) 26 facing each other. Referring to the battery cell 21 located on one side in the X direction shown in Fig. 1, in the terminal surface 26 located on an upper side in the Z direction, a positive electrode terminal 27 is provided on one side in the Y direction, and a negative electrode terminal 28 is arranged on another side in the Y direction. On the terminal surface 26, a gas release valve 29 as a safety valve is provided so as to be located between the terminals 27 and 28.

In the plurality of battery cells 21 in the present embodiment, the positive electrode terminal 27 located on one side in the X direction in the battery cell 21, and the negative electrode terminal 28 on another side in the X direction in a battery cell 21 adjacent to the above battery cell 21 are arranged in the X direction and alternately arranged to be adjacent to each other in the X direction. Adopting such an arrangement of the battery cells 21 allows all the battery cells 21 to be electrically connected in series as described later. In the present embodiment, such an arrangement is adopted in order to connect all the battery cells 21 in series. However, it is also possible to connect all the battery cells 21 in parallel. In that case, terminals having the same polarity in positive and negative may simply be arranged in the X direction of the adjacent battery cells 21. It is also possible to connect all battery cells 21 with use of both series and parallel. In that case, terminals having the same polarity in positive and negative may simply be arranged in the X direction of the battery cells 21 connected in parallel, and terminals having different polarities in positive and negative may simply be arranged in the X direction of the battery cells 21 connected in series.

The bus bar unit 31 includes a plurality of (five in the present embodiment) bus bars 33A to 33C and a resin-made bus bar frame 60 that holds these, and the bus bar unit 31 is arranged on the terminal surface 26 of the battery cell 21. That is, the plurality of bus bars 33A to 33C are arranged on the bus bar frame 60 on substantially the same plane, and are arranged in the battery cell 21 group in an integrated state.

The bus bars 33A to 33C form a power supply circuit that supplies power of the battery cells 21. The bus bars 33A to 33C are electrically connected and fixed to the terminals 27 and 28 of a predetermined battery cell 21 by welding. A first bus bar 33A is a member that electrically connects the positive electrode terminal 27 and the negative electrode terminal 28 that are adjacent to each other in the X direction, and three sheets are prepared in the present embodiment. In a case where the battery cells 21 are connected in parallel, the first bus bar 33Ais electrically connected to the positive electrode terminals 27 or the negative electrode terminals 28. A second bus bar 33B is a member that is electrically connected to the positive electrode terminal 27 of the battery cell 21 located at one end in a direction of a current flow, and one sheet is prepared in the present embodiment. A third bus bar 33C is a member that is electrically connected to the negative electrode terminal 28 of the battery cell 21 located at another end in a direction of a current flow, and one sheet is prepared in the present embodiment.

In a case of series connection, one bus bar 33A electrically connects the positive electrode terminal 27 of the determined battery cell 21 and the negative electrode terminal 28 of another determined battery cell 21. In a case of parallel connection, one bus bar 33A electrically connects the positive electrode terminals 27 of determined two or more battery cells 21, electrically connects the negative electrode terminals 28 of another determined two or more battery cells 21, and electrically connects these positive electrode terminal 27 group and negative electrode terminal 28 group. In the present embodiment, a case where four battery cells 21 are connected in series is shown.

The bus bar 33B is provided with a shaft part 34, and a part of the positive electrode external terminal 18 insert-molded in the lid body 17 is engaged to the shaft part 34. On the bus bar 33C, a shaft part 35 is provided, and the circuit board 78 is engaged to the shaft part 35. To this circuit board 78, a part of the negative electrode external terminal 19 insert-molded in the lid body 17 is connected. This allows the plurality of battery cells 21 to be electrically charged and discharged by connecting the external terminals 18 and 19 to external equipment (for example, a motorcycle).

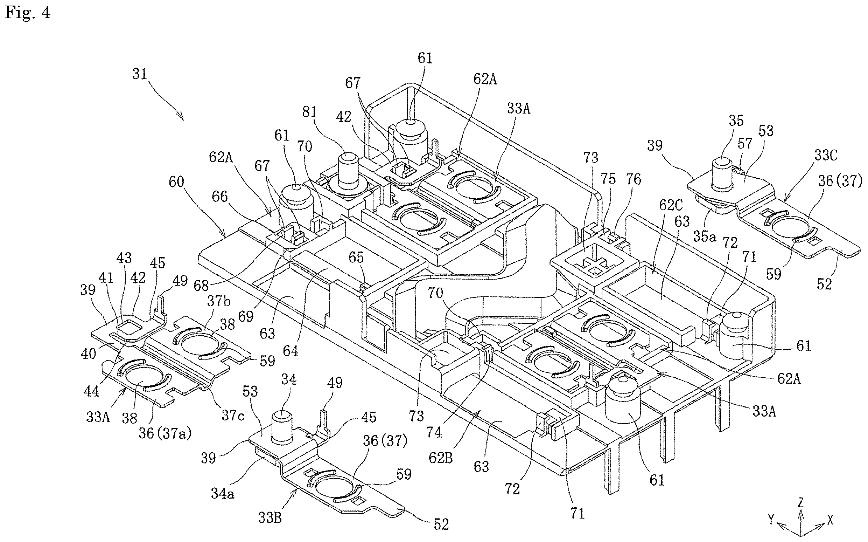

The bus bar frame 60 functions as an inner lid that partitions the inside of the outer case 12. Referring to Fig. 4, the bus bar frame 60 is provided with a plurality of mounting parts 62A to 62C to mount the bus bars 33A to 33C. In the present embodiment, in a region on one side in the Y direction, the mounting part 62B to mount the bus bar 33B is provided on one side in the X direction, the mounting part 62C to mount the bus bar 33C is provided on another side in the X direction, and between these, one mounting part 62A to mount the bus bar 33A is provided. In a region on another side in the Y direction, two mounting parts 62A to mount the bus bar 33A are provided aligned in the X direction.

As shown in Figs. 1 to 3, the circuit board 78 is arranged on the bus bar unit 31 as a flat plate extending in the XY plane. By fitting a mounting hole 79 of the circuit board 78 to a support column 61 of the bus bar frame 60, and by applying plastic deformation (hot melting or swaging) on a tip end of a penetrating support column 61, the circuit board 78 is fixed to the bus bar frame 60. The exploded views shown in Figs. 1, 2 and 4 show a state where the circuit board 78 is removed from the bus bar frame 60, but a tip end of the support columns 61 is shown with a shape after being subjected to plastic deformation, for the sake of convenience of the drawings. In the actual manufacturing process, the tip end of the support column 61 is subjected to plastic deformation after the tip end of the support column 61 before being deformed is inserted into the mounting hole 79. As a result, as shown in Fig. 3, the tip end of the support column 61 is rounded into a dome shape, and a lower side in the Z direction of the dome-shaped portion abuts against a periphery of the mounting hole 79. The circuit board 78 is provided with a connection hole 80 that connects the shaft part 35 of the bus bar 33C, and arranged with a shaft part 81 to engage a part of the insert-molded negative electrode external terminal 19 in the lid body 17.

On the circuit board 78, a monitoring circuit (a battery monitoring unit) that monitors an output voltage (a potential difference) of the battery cell 21 is formed by a plurality of devices 82. In order to electrically connect the individual battery cells 21 to this monitoring circuit, the circuit board 78 is provided with a plurality of connection holes 83, and these connection holes 83 are respectively connected with a board connecting parts 49 of the bus bars 33A and 33B. For connecting the monitoring circuit and the bus bar 33C, the shaft part 35 is also used, and the monitoring circuit is branched and connected to a conductive part formed around the connection hole 80 that connects the shaft part 35.

The circuit board 78 is formed in a substantially T shape with the Y direction as an upper side in the XY plane viewed from the upper side in the Z direction, and corners on one side and another side in the Y direction are cut out in a region on one side in the X direction of the circuit board 78. Specifically, on one side in the Y direction of the circuit board 78, a side along the Y direction is cut out in two steps. At an end portion on one side of the circuit board 78 in the Y direction, the positive electrode external terminal 18 is located on the upper side in the Z direction, and a part of the positive electrode external terminal 18 is inserted into the lid body 17. Therefore, in order to avoid that range, the end portion on one side in the Y direction of the circuit board 78 is cut out. In one side in the Y direction of the circuit board 78 that is cut out in two steps, in order to connect the shaft part 34 of the bus bar 33B to a part of the positive electrode external terminal 18 that is inserted inside the lid body 17, a region closer to the center in the Y direction than an end portion on one side in the Y direction is cut out to avoid that range. In other words, the positive electrode external terminal 18 and the bus bar 33B are not connected to the circuit board 78, and a connection path between the positive electrode external terminal 18 and the bus bar 33B bypasses the circuit board 78. At an end portion on another side of the circuit board 78 in the Y direction, the negative electrode external terminal 19 is located on the upper side in the Z direction, and a part of the negative electrode external terminal 19 is inserted into the lid body 17. Therefore, in order to avoid that range, an end portion on another side in the Y direction of the circuit board 78 is cut out.

Hereinafter, configurations of the bus bars 33A to 33C, the mounting parts 62A to 62C, and the circuit board 78 will be described in more detail.

### (Details of first bus bar)

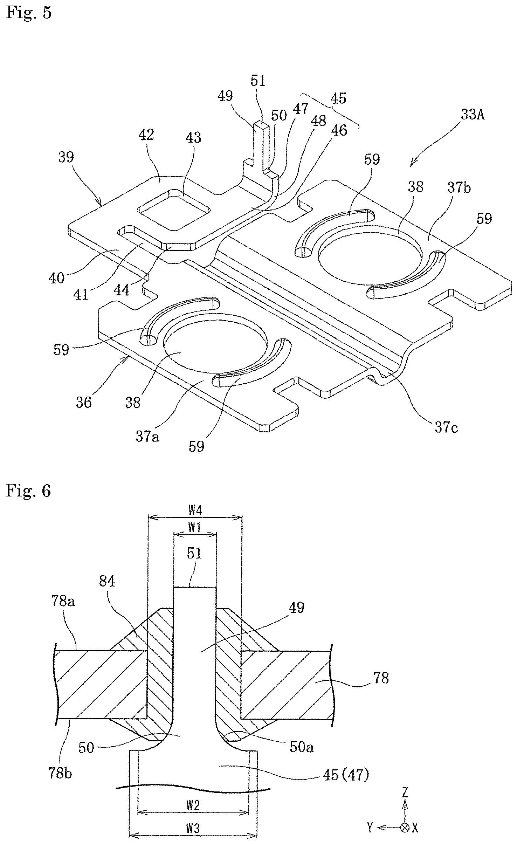

As shown in Figs. 4 and 5, the first bus bar (a certain bus bar) 33A includes a bus bar body 36, a flexible portion 40, a fixed portion 42, a continuous portion 45, and a board connecting part 49, and has an integrated structure where these are formed of the same metal material (one metal plate). Among them, the flexible portion 40, the fixed portion 42, and the continuous portion 45 form a protruding portion 39 protruding outward (to an another side) from the bus bar body 36 in the Y direction (a direction intersecting the arrangement direction) so as to be away from the gas release valve 29 of the battery cell 21.

The continuous portion 45 includes a base portion 46 continuous with the fixed portion 42, and a tip end portion 47 continuous with the board connecting part 49. The flexible portion 40, the fixed portion 42, and the base portion 46 of the continuous portion 45 are a first portion continuous with the bus bar body 36 in the protruding portion 39. The tip end portion 47 of the continuous portion 45 is a second portion continuous with the board connecting part 49 in the protruding portion 39. Between the base portion 46 (the first portion) and the tip end portion 47 (the second portion) of the continuous portion 45, there is formed a curved portion 48 to cause the tip end portion 47 to protrude in a direction orthogonal to a surface of the base portion 46 (the XY plane). This causes the first portion of the protruding portion 39 and the bus bar body 36 to be located in the same plane, and the second portion of the protruding portion 39 and the board connecting part 49 to be located in the same plane. Being located in the same plane also includes a state where some distortion (curvature) has occurred by welding the bus bar body 36 to the terminals 27 and 28 of the battery cell 21, fixing the fixed portion 42 to the bus bar frame 60, and soldering the board connecting part 49 to the circuit board 78.

Referring also to Fig. 2, the bus bar body 36 includes a pair of joints 37a and 37b. The joints 37a and 37b are fixed by welding and electrically connected to the terminals 27 and 28 adjacent to each other in the X direction. The joints 37a and 37b have circular through holes 38 through which protruding portions of the terminals 27 and 28 of the battery cell 21 can be inserted. In the present embodiment, since the shaft part of the terminal 28 on the negative electrode side protrudes, this shaft part can be inserted through the through hole 38. Reference numeral 59 in Fig. 5 denotes a welded portion (a welding track) of the joints 37a and 37b, and the welded portion is formed in an arc shape around the through hole 38. This welded portion 59 is not formed before joining to the terminals 27 and 28, but is shown in all the drawings for convenience of explanation. Without limiting to the first bus bar (a certain bus bar) 33A, the through hole 38 and the welded portion 59 have the same configuration in the second bus bar 33B and the third bus bar 33C. Between the joints 37a and 37b, a curved portion 37c that is curved in a substantially semi-annular shape is provided. The curved portion 37c is provided for allowing a change in a distance between the terminals 27 and 28 adjacent to each other in the X direction when the case 22 expands due to an occurrence of an unintended abnormality in the battery cell 21, and for maintaining electrical connection of the battery cell 21.

The flexible portion 40 is continuous with the joint 37a, and is provided to extend a creepage distance from the bus bar body 36 to the board connecting part 49 and to allow displacement between the fixed portion 42 and the bus bar body 36. The flexible portion 40 is partitioned from the fixed portion 42 by a slit 41 extending in a direction away from the bus bar body 36 (outward in the Y direction). The slit 41 causes the flexible portion 40 to be formed such that a lateral width in the X direction is narrower than that of the fixed portion 42, and to be configured elastically deformable with respect to the bus bar body 36 and the fixed portion 42.

The fixed portion 42 is provided to suppress movement of the board connecting part 49 due to movement of the battery cell 21. The fixed portion 42 is provided continuously with an outer end of the flexible portion 40 in the Y direction, and is provided aligned in a direction in which the joint 37b is located with respect to the flexible portion 40 (the arrangement direction of the battery cells 21). The fixed portion 42 is provided with a locking hole 43 punched out in a square shape. At a corner of the flexible portion 40 and the fixed portion 42 facing the bus bar body 36, a chamfered notch 44 is provided.

The continuous portion 45 includes the base portion 46, the tip end portion 47, and the curved portion 48 as described above. The continuous portion 45 is provided so as to protrude toward a side opposite to the flexible portion 40 in the X direction, with respect to the fixed portion 42. A lateral width of the continuous portion 45 in the Y direction is narrower than a lateral width of the fixed portion 42 in the Y direction. A side of the base portion 46 of the continuous portion 45 facing the bus bar body 36 is located on a straight line having no irregularities with respect to a side of the fixed portion 42 facing the bus bar body 36.

The board connecting part 49 is fixed to the connection hole 83 of the circuit board 78 by soldering, and is electrically connected to the monitoring circuit. The board connecting part 49 has a plate shape being continuous with the fixed portion 42 via the continuous portion 45 and protruding along the YZ plane orthogonal to the surface (the XY plane) of the fixed portion 42. That is, the board connecting part 49 is arranged in parallel with the long side surface 23 of the case 22 extending along the YZ plane. In other words, the board connecting part 49 has a plate shape protruding along the YZ plane that is orthogonal to the X direction, which is a direction in which the case of the battery cell 21 easily expands.

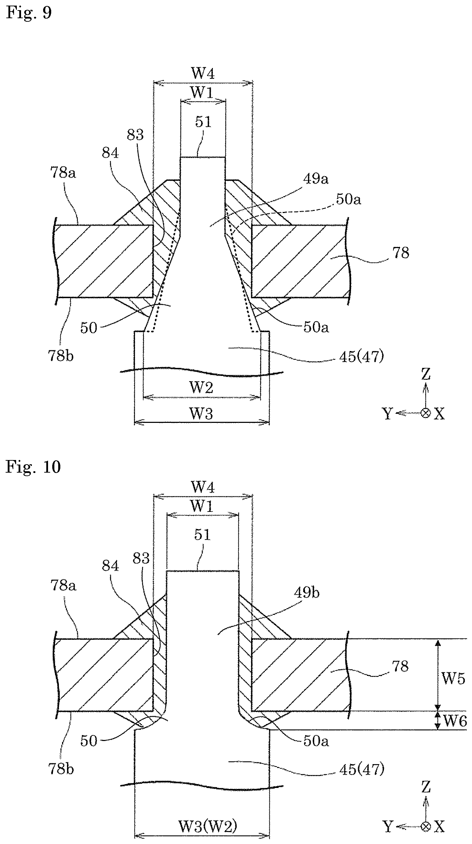

Referring to Fig. 6, the board connecting part 49 includes a seat 50 at a base end located on the continuous portion 45 (the protruding portion 39) side. A lateral width of the seat 50 in the Y direction (a lateral direction) gradually narrows from the continuous portion 45 toward a tip end 51 of the board connecting part 49 (W2→W1). An inclined oblique side 50a of the seat 50 has a curved shape (an R surface) with a predetermined curvature in the present embodiment, but may have a straight shape (a C surface), and the shape can be changed, as necessary. A lateral width W1 of the board connecting part 49 on the tip end 51 side from the seat 50 is uniform, and is narrower than a lateral width W3 of the continuous portion 45 in the Y direction. The lateral width W1 of the board connecting part 49 excluding the seat 50 is narrower than a lateral width W4 of the connection hole 83 of the circuit board 78 in the Y direction. A lateral width W2 of the widest portion of the seat 50 is wider than the lateral width W4 of the connection hole 83 of the circuit board 78. Various modified examples of the board connecting part 49 will be described later with reference to Figs. 9 and 10.

### (Details of first mounting part)

As shown in Figs. 2 and 4, a first mounting part 62A includes a mounting hole 63 that penetrates in the Z direction. The bus bar body 36 is arranged above the mounting hole 63, and the terminals 27 and 28 of the battery cell 21 are arranged inside from below. At a center of the mounting hole 63 in the X direction, a holding part 64 that holds the curved portion 37c is provided so as to extend in the Y direction. The mounting hole 63 is provided with a locking piece 65 that is locked with an upper surface of the curved portion 37c (the bus bar body 36) so as to be located on an opposite side of the protruding portion 39 in the Y direction and on the holding part 64.

A fixing receiving part 66 that fixes the fixed portion 42 is provided on the mounting part 62A outward of the mounting hole 63 in the Y direction. The fixing receiving part 66 includes a pair of locking protrusions 67 that are locked around the locking hole 43. The locking protrusion 67 is provided at a tip end of an elastic piece 68 in the Z direction. The elastic piece 68 is elastically deformable along the Y direction, and penetrates through the locking hole 43. On the mounting hole 63 side of the fixing receiving part 66, a step 69 that abuts against the notch 44 of the fixed portion 42 is provided so as to protrude upward in the Z direction.

The mounting part 62A is provided with a frame 70 that supports the continuous portion 45, at a position adjacent to the fixing receiving part 66 in the X direction. The frame 70 is formed in an L-shape in plan view so as to support an edge of the continuous portion 45 outward in the Y direction and an outer surface of the tip end portion 47.

When the bus bar 33A is mounted to the mounting part 62A, the curved portion 37c is inserted between the holding part 64 and the locking piece 65, and the bus bar body 36 is arranged in the mounting hole 63. After that, the fixed portion 42 is pushed downward in the Z direction toward the fixing receiving part 66, and the locking protrusion 67 is passed through the locking hole 43. This causes the locking protrusion 67 to be locked to an edge of the locking hole 43, and the notch 44 to be supported by the step 69. The frame 70 supports the continuous portion 45.

Thus, the fixed portion 42 is provided with the locking hole 43, and the bus bar frame 60 is provided with the locking protrusion 67. Then, the locking protrusion 67 can be locked in the locking hole 43 by simply pushing the fixed portion 42 into the fixing receiving part 66. Therefore, the workability of assembling the bus bar 33A to the bus bar frame 60 can be improved, and the fixed portion 42 can be effectively fixed to the bus bar frame 60.

### (Details of circuit board)

As shown in Figs. 2 and 6, the connection hole 83 of the circuit board 78 is a through hole larger than a cross-sectional shape of the board connecting part 49 excluding the seat 50. The solder portion 84 that connects the board connecting part 49 and the circuit board 78 is provided from one surface 78a to another surface 78b of the circuit board 78, through the connection hole 83 (a back fillet). The solder portion 84 covers a part of the seat 50 of the board connecting part 49.

Since the lateral width W1 of the board connecting part 49 is narrower than the lateral width W3 of the continuous portion 45 (the protruding portion 39), thermal conductivity of the board connecting part 49 can be improved at a time of soldering, while electrical conductivity of the protruding portion 39 can be secured at a time of use. The seat 50 can suppress excessive insertion of the board connecting part 49 into circuit board 78, and can also suppress flow-down of the molten solder at a time of soldering.

Specifically, flowability of the solder on a surface of the board connecting part 49 is good when a temperature is higher than a temperature determined according to a type of solder, but is poor when the temperature is lower than the determined temperature. When the board connecting part 49 is soldered to the circuit board 78, the tip end 51 side of the board connecting part 49 is heated. Therefore, the temperature gradually decreases from the tip end 51 to the seat 50. Moreover, in the seat 50, a lateral width gradually increases from the lateral width W1 to the lateral width W2 toward the continuous portion 45, so that a decreasing gradient of the temperature becomes steep. That is, in the seat 50, the temperature on the tip end 51 side is likely to be higher than the determined temperature, but the temperature on the continuous portion 45 side is unlikely to be higher than the determined temperature. Since the lateral width W3 of the continuous portion 45 becomes further wider than the lateral width W2 of the seat 50, the temperature does not become higher than the determined temperature. Therefore, it is possible to suppress flowing of the molten solder to the continuous portion 45. As a result, it is possible to prevent unnecessary flow-down of the solder, and to properly join the board connecting part 49 and the circuit board 78 with an appropriate amount of solder.

Since the bus bar 33A, the bus bar frame 60, and the circuit board 78 are configured in this way, the following effects can be obtained when the energy storage apparatus 10 is used.

The bus bar 33A includes the flexible portion 40 and the fixed portion 42 between the bus bar body 36 and the board connecting part 49. Therefore, vibration transmitted from the battery cell 21 to the bus bar 33A can be absorbed by the flexible portion 40, and transmission from the fixed portion 42 to the board connecting part 49 can be suppressed. Therefore, it is possible to effectively suppress damage to the board connecting part 49 and the solder portion 84 of the circuit board 78. Deformation of the flexible portion 40 can also effectively suppress damage of a joint part between the bus bar body 36 and the terminals 27 and 28 of the battery cell 21. As a result, it is possible to effectively suppress an occurrence of defects in electrical connection between the battery cells 21 and the circuit board 78 and electrical connection between the battery cells 21.

The bus bar body 36, the flexible portion 40, and the fixed portion 42 are formed in the same plane. Therefore, vibration can be effectively absorbed by the flexible portion 40, and the electrical resistance of the flexible portion 40 can be minimized. Since dimensions of the bus bar 33A in the Z direction can be suppressed, it is possible to prevent an increase of a total height of the energy storage apparatus 10.

Between the flexible portion 40 and the fixed portion 42, the slit 41 is formed. Therefore, elasticity can be effectively given to the flexible portion 40 adjacent to the fixed portion 42. It is possible to secure electrical connection between the battery cell 21 and the circuit board 78 while preventing the bus bar 33A from increasing in size due to the provision of the flexible portion 40 and the fixed portion 42.

The board connecting part 49 protrudes in a direction intersecting a surface of the fixed portion 42. Therefore, a load on the solder portion 84 connecting the board connecting part 49 and the circuit board 78 can be minimized, so that damage to the solder portion 84 can be effectively suppressed. The protruding portion 39 including the board connecting part 49 protrudes in a direction away from the gas release valve 29 of the battery cell 21. Therefore, when high temperature vent gas is ejected from the gas release valve 29 due to an unintended abnormality, it is possible to suppress an influence of the vent gas on the flexible portion 40, the fixed portion 42, and the board connecting part 49.

The board connecting part 49 is formed with the seat 50 whose lateral width is gradually narrowed from the continuous portion 45 toward the tip end 51. Therefore, rigidity of the base end of the board connecting part 49 can be increased. Therefore, it is possible to suppress breakage of the board connecting part 49, damage of the solder portion 84, or the like due to stress concentration on the base end portion (the seat 50) of the board connecting part 49. Moreover, the solder portion 84 is formed so as to cover a part of the seat 50. Therefore, since the seat 50 of the board connecting part 49 can be reinforced by the solder portion 84, breakage at the seat 50 can be effectively suppressed.

### (Details of second bus bar)

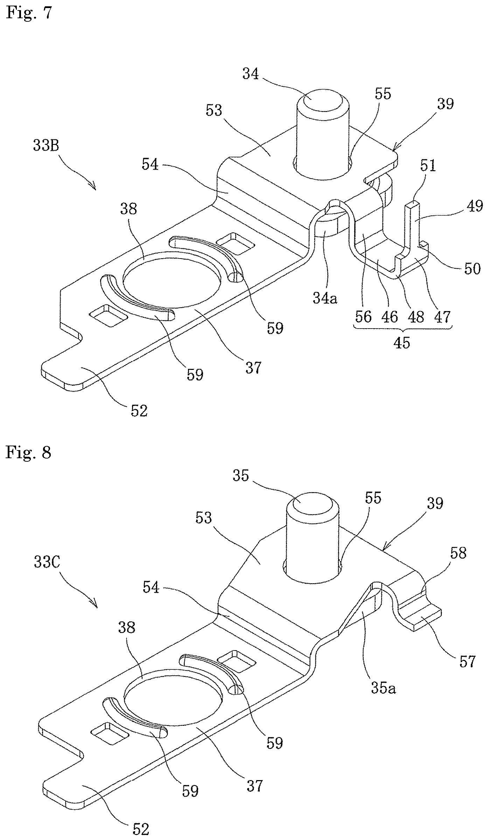

As shown in Figs. 4 and 7, the second bus bar 33B includes a bus bar body 36, an external terminal connecting part 53, a continuous portion 45, and a board connecting part 49, and has an integrated structure where these are formed of the same metal material. In the second bus bar 33B, the external terminal connecting part 53 and the continuous portion 45 form a protruding portion 39 protruding from the bus bar body 36 inward in the Y direction (a direction intersecting the arrangement direction). The external terminal connecting part 53 has a function similar to that of the fixed portion 42 of the bus bar 33A. That is, the second bus bar 33B is different from the bus bar 33A in that the flexible portion 40 is not provided.

The bus bar body 36 includes one joint 37, and does not include a configuration corresponding to the curved portion 37c of the bus bar 33A. The joint 37 has a shape elongated along the Y direction, with the X direction as a short-side direction and the Y direction as a long-side direction. At an outer end of the joint 37 in the Y direction, a protruding piece 52 that protrudes in the same plane is provided. The protruding piece 52 is provided on an opposite side in the Y direction from the external terminal connecting part 53, the continuous portion 45, and the board connecting part 49 with the joint 37 as a reference.

The external terminal connecting part 53 is located with an interval in the Z direction with respect to the bus bar body 36, and is provided for mounting the shaft part 34. The external terminal connecting part 53 includes a step 54 that is bent so as to extend along the XZ plane, and the step 54 is continuous with an inner end of the bus bar body 36 in the Y direction. At a center of the external terminal connecting part 53, a through hole 55 through which the shaft part 34 protrudes is provided. The shaft part 34 includes a quadrangular head part 34a when viewed from an axial direction, and the head part 34a protrudes below the external terminal connecting part 53.

The continuous portion 45 includes a step 56, a base portion 46, and a tip end portion 47. The step 56 is continuous with one end of the external terminal connecting part 53 in the X direction, is bent downward in the Z direction, and extends along the YZ plane. The base portion 46 is continuous with the step 56, and the tip end portion 47 is continuous with the base portion 46 via a curved portion 48. A lateral width of the continuous portion 45 in the Y direction is formed to have the same dimension as a lateral width of the continuous portion 45 of the first bus bar 33A.

Similarly to the first bus bar 33A, the board connecting part 49 includes a seat 50 and is formed so as to be continuous with the continuous portion 45. A connection hole 83 of the circuit board 78 to which the board connecting part 49 is electrically connected is also formed similarly to the connection hole 83 connecting the board connecting part 49 of the first bus bar 33A.

### (Details of second mounting part)

As shown in Fig. 4, a second mounting part 62B includes a mounting hole 63 penetrating in the Z direction. In the mounting hole 63, the holding part 64 and the locking piece 65 of the first mounting part 62A are not provided. Outward of the mounting hole 63 in the Y direction, a placement part 71 on which the protruding piece 52 is placed is provided. The placement part 71 is provided with an elastic locking part 72 that is elastically deformable and locks on an upper surface of the protruding piece 52.

The mounting part 62B is provided with a recessed portion 73 formed in a quadrangular recess and to be arranged with the head part 34a of the shaft part 34, at a position corresponding to the external terminal connecting part 53. At a position adjacent to the recessed portion 73 in the X direction, a frame 70 that supports the continuous portion 45 is provided. The frame 70 is provided with an elastic locking part 74 that is elastically deformable and locks on an upper surface of the base portion 46.

When the bus bar 33B is mounted to the mounting part 62B, the protruding piece 52 is arranged on the placement part 71, the shaft part 34 is arranged on the recessed portion 73, and the continuous portion 45 is arranged on the frame 70. After that, by pushing the entire bus bar 33B downward in the Z direction toward the mounting part 62B, the elastic locking part 72 is locked to the protruding piece 52, the head part 34a of the shaft part 34 is arranged in the recessed portion 73, and the elastic locking part 74 is locked to the base portion 46.

Between the placement part 71 and the elastic locking part 72 in the Z direction, a predetermined interval corresponding to a thickness of the protruding piece 52 in the Z direction is provided. As a result, when the protruding piece 52 is placed on the placement part 71, the protruding piece 52 is slid in the Y direction, so that the protruding piece 52 can be inserted and placed in a gap between the placement part 71 and the elastic locking part 72.

With the bus bar 33B and the mounting part 62B thus configured, similarly to the case of the bus bar 33A and the mounting part 62A, the assembling workability can be improved and the fixing can be effectively performed. The bus bar 33B cannot provide the effect related to the flexible portion 40 of the bus bar 33A, but can similarly provide other effects (in particular, the soldered portion of the board connecting part 49).

### (Details of the third bus bar)

As shown in Figs. 4 and 8, the third bus bar 33C includes a bus bar body 36, an external terminal connecting part 53, and a locking piece 57, and has an integrated structure where these are formed of the same metal material. That is, the third bus bar 33C is different from the second bus bar 33B in that the locking piece 57 is provided instead of the continuous portion 45, and the board connecting part 49 is not provided.

The bus bar body 36 includes one joint 37 and a protruding piece 52, and the external terminal connecting part 53 includes a step 54 and a through hole 55. The joint 37 has a shape elongated along the Y direction, with the X direction as a short-side direction and the Y direction as a long-side direction. The protruding piece 52 is provided on an opposite side of the external terminal connecting part 53 and the locking piece 57 in the Y direction with the joint 37 as a reference. The locking piece 57 protrudes from the external terminal connecting part 53 toward another side (outward) in the X direction so as to be located in parallel with the external terminal connecting part 53, and a plate surface thereof is along the XY plane. The locking piece 57 includes a step 58 that is bent along the YZ plane, and the step 58 is continuous with one end of the external terminal connecting part 53 in the X direction.

### (Details of third mounting part)

As shown in Fig. 4, a third mounting part 62C includes a mounting hole 63 including a placement part 71 and an elastic locking part 72, and a recessed portion 73, similarly to the second mounting part 62B. At a position adjacent to the recessed portion 73 in the X direction, a lock receiving part 75 is provided instead of the frame 70. The lock receiving part 75 is provided with an elastic locking part 76 that is elastically deformable and locks on an upper surface of the locking piece 57.

When the bus bar 33C is mounted to the mounting part 62C, the protruding piece 52 is arranged on the placement part 71, the shaft part 35 is arranged on the recessed portion 73, and the locking piece 57 is arranged on the lock receiving part 75. After that, by pushing the bus bar 33C downward in the Z direction toward the mounting part 62C, the elastic locking part 72 is locked to the protruding piece 52, the head part 35a of the shaft part 35 is arranged in the recessed portion 73, and the elastic locking part 76 is locked to the locking piece 57.

Between the placement part 71 and the elastic locking part 72 in the Z direction, an aspect in which a predetermined interval corresponding to a thickness of the protruding piece 52 in the Z direction is provided is similar to the configuration of the bus bar 33B. This similarly applies to the lock receiving part 75 and the elastic locking part 76, and a predetermined interval corresponding to a thickness of the protruding piece 52 in the Z direction is provided between the lock receiving part 75 and the elastic locking part 76 in the Z direction. As a result, when the protruding piece 52 is placed on the lock receiving part 75, the protruding piece 52 is slid in the X direction, so that the protruding piece 52 can be inserted and placed in a gap between the lock receiving part 75 and the elastic locking part 76.

With the bus bar 33C and the mounting part 62C thus configured, similarly to the case of the bus bar 33A and the mounting part 62A, the assembling workability can be improved and the fixing can be effectively performed.

Next, modified examples of the board connecting part 49 according to the embodiment described above will be described focusing on differences from the embodiment described above.

### (Modified example 1)

Fig. 9 is a cross-sectional view showing a board connecting part 49a and a solder portion 84 according to Modified example 1 of the embodiment. Regarding the board connecting part 49a, a side surface when viewed from the X direction is illustrated, rather than a cross section.

A seat 50 of the board connecting part 49a shown in Fig. 9 has a straight oblique side 50a, and at least a part of the oblique side 50a is arranged inside a connection hole 83 of a circuit board 78. That is, a part of the seat 50 is inserted into the connection hole 83 of the circuit board 78. In this case, an upper end of the base portion 50 may be formed so as to reach the middle of a thickness range (a width range in the Z direction) of the circuit board 78, or may be formed so as to penetrate the connection hole 83 of the circuit board 78 as shown by a thick dotted line.

In any of the above cases, between a tip end 51 of the board connecting part 49a and a continuous portion 45, there is a portion where a gap between the board connecting part 49a and an inner surface of the connection hole 83 is gradually narrowed. Therefore, solder that enters the gap from a one surface 78a side of the circuit board 78 easily spreads to an another surface 78b side of the circuit board 78 by the capillary phenomenon. As a result, reliability of electrical and mechanical connection between the board connecting part 49a and the circuit board 78 is further improved. Further, in the board connecting part 49a according to this modified example, a width (a width in the Z direction and the Y direction) of the seat 50 fixed by the solder portion 84 is relatively large. Therefore, damage to the board connecting part 49a or the continuous portion 45 due to, for example, vibration or impact is effectively suppressed.

In the seat 50 shown in Fig. 9, it is not essential that the oblique side 50a is linear. The oblique side 50a may have a shape curved inward or outward. The oblique side 50a may have a polygonal-line shape having a plurality of linear portions.

### (Modified example 2)

Fig. 10 is a cross-sectional view showing a board connecting part 49b and a solder portion 84 according to Modified example 2 of the embodiment. Regarding the board connecting part 49b, a side surface when viewed from the X direction is illustrated, rather than a cross section.

The board connecting part 49b shown in Fig. 10 has a larger lateral width W1 than that of the board connecting part 49 according to the embodiment. Specifically, in this modified example, the lateral width W1 of the board connecting part 49b and a lateral width W4 of a connection hole 83 in the Y direction satisfy a relationship of "W4 - W1 < W1". That is, the lateral width W1 of the board connecting part 49b is larger than half the lateral width W4 of the connection hole 83 in the Y direction.

Further, a seat 50 according to this modified example is arranged at a position closer to a board 78 as compared with the seat 50 according to the embodiment (see Fig. 6). In this modified example, as shown in Fig. 10, when a thickness of the circuit board 78 is defined as W5 and a width of a gap between a lower end of the seat 50 and another surface 78b of the circuit board 78 is defined as W6, a condition of "W6 < W5" is satisfied. W6 may further satisfy a condition of "W6 < (W4 - W1)/2". That is, W6 may be smaller than a width of a gap between the board connecting part 49b and the connection hole 83 ((W4 - W1)/2).

In this way, the board connecting part 49b according to this modified example is formed such that the gap between the board connecting part 49b and the circuit board 78 in the Y-axis direction and the Z-axis direction is smaller. As a result, solder that enters the gap between the plate connecting part 49b and the connection hole 83 from one surface 78a side of the circuit board 78 is more easily spread to another surface 78b side of the circuit board 78 by the capillary phenomenon. As a result, similarly to Modified example 1, reliability of electrical and mechanical connection between the board connecting part 49b and the circuit board 78 is further improved, and damage to the board connecting part 49b or the continuous portion 45 due to, for example, vibration or impact is effectively suppressed.

In the seat 50 shown in Fig. 10, it is not essential that an oblique side 50a has a curved shape. The oblique side 50a may have a shape having a linear portion at least in a part.

### (Other embodiments)

The energy storage apparatus 10 of the present invention is not limited to the configurations of the above-described embodiment and modified examples, and various modified examples are possible.

For example, the third bus bar 33C may also be provided with a dedicated board connecting part 49. The board connecting part 49 may be provided on only one of the first to third bus bars 33A to 33C, that is, five bus bars.

The bus bar 33A may have a configuration in which predetermined portions of the bus bar body 36, the flexible portion 40, the fixed portion 42, and the board connecting part 49 are provided separately and are integrated by joining or the like. The bus bar body 36, the flexible portion 40, and the fixed portion 42 may be formed with a step if necessary.

The flexible portion 40 is formed aligned in the X direction by partitioning with the slit 41 with respect to the fixed portion 42, but may be provided aligned in the Y direction, and the shape may be changed, as necessary. A fixing structure of the fixed portion 42 can also be changed, as necessary.

The board connecting part 49 may be provided so as to protrude in the same plane (in parallel) with respect to the fixed portion 42. The board connecting part 49 may protrude in a direction intersecting the long side surface 23 of the battery cell 21. The solder portion 84 may be configured not to cover a part of the seat 50 of the board connecting part 49.

The battery cell 21 included in the energy storage device may be a winding type in which a strip-shaped electrode sheet and a separator are wound, or may be a laminated type in which a plurality of rectangular electrode sheets and a separator are laminated. The battery cell 21 is not limited to the prismatic battery in which the electrode assembly is accommodated in the case 22, but may be a laminated battery in which a laminated electrode assembly is sealed with a laminate film.

The energy storage apparatus 10 of the present invention can be used for starting a gasoline vehicle or a diesel vehicle equipped only with an internal combustion engine, and a hybrid vehicle equipped with an internal combustion engine and an electric motor. The energy storage apparatus 10 of the present invention can also be used for driving a hybrid vehicle, and an electric vehicle equipped with only an electric motor.

### DESCRIPTION OF REFERENCE SIGNS

10: Energy storage apparatus
12: Outer case
13: Main body
14: Bottom wall
15: End wall
16: Side wall
17: Lid body
18: Positive electrode external terminal
18a, 19a: First connecting part
18b, 19b: Second connecting part
19: Negative electrode external terminal
21: Battery cell (energy storage device)
22: Case
23: Long side surface
24: Short side surface
25: Bottom surface
26: Terminal surface
27: Positive electrode terminal
28: Negative electrode terminal
29: Gas release valve
31: Bus bar unit
33A to 33C: Bus bar
34, 35, 81: Shaft part
34a, 35a: Head part
36: Bus bar body
37, 37a, 37b: Joint
37c, 48: Curved portion
38, 55: Through hole
39: Protruding portion
40: Flexible portion
41: Slit
42: Fixed portion
43: Locking hole
44: Notch
45: Continuous portion
46: Base portion
47: Tip end portion
49, 49a, 49b: Board connecting part
50: Seat
50a: Oblique side
51: Tip end
52: Protruding piece
53: External terminal connecting part
54, 56, 58, 69: Step
57, 65: Locking piece
59: Welded portion
60: Bus bar frame (inner lid)
61: Support column
62A to 62C: Mounting part
63, 79: Mounting hole
64: Holding part
66: Fixing receiving part
67: Locking protrusion
68: Elastic piece
70: Frame
71: Placement part
72, 74, 76: Elastic locking part
73: Recessed portion
75: Lock receiving part
78: Circuit board
78a: One surface
78b: Another surface
80, 83: Connection hole
82: Device
84: Solder portion

## Claims

1. An energy storage apparatus comprising:
an energy storage device having a terminal;
a bus bar connected to the terminal; and
a circuit board electrically connected to the bus bar, wherein
the bus bar includes:
a bus bar body fixed to the terminal;
a protruding portion protruding from the bus bar body; and
a board connecting part protruding from the protruding portion and fixed to the circuit board,
a lateral width of the board connecting part in a lateral direction orthogonal to a protruding direction of the board connecting part is narrower than a lateral width of the protruding portion in the lateral direction, and
at a base end of the board connecting part located on a side of the protruding portion, there is formed a seat having a lateral width gradually narrowed from the protruding portion toward a tip end of the board connecting part.

2. The energy storage apparatus according to claim 1, comprising a solder portion fixing the circuit board and the board connecting part, wherein
the solder portion is provided from one surface to another surface of the circuit board through a connection hole of the circuit board in which the board connecting part penetrates, the solder portion covering at least a part of the seat.

3. The energy storage apparatus according to claim 1 or 2, wherein
the protruding portion includes a first portion located on a side of the bus bar body, a second portion located on a side of the board connecting part, and a curved portion that causes the second portion to protrude in a direction intersecting a surface of the first portion, and
the first portion and the bus bar body are formed in a same plane, and the second portion and the board connecting part are formed in a same plane.

4. The energy storage apparatus according to claim 3, comprising an inner lid arranged on a side of a terminal surface where the terminal of the energy storage device is located, wherein
the first portion of the protruding portion includes a fixed portion that is fixed to the inner lid.

5. The energy storage apparatus according to claim 3 or 4, wherein
the energy storage device includes a prismatic case having a pair of long side surfaces facing each other, and a pair of short side surfaces facing each other and extending in a direction intersecting the long side surfaces, and
the board connecting part and the long side surfaces are arranged in parallel.

6. The energy storage apparatus according to claim 1, wherein
a plurality of the energy storage devices are arranged to allow the terminals to be located on a same plane,
the energy storage apparatus further includes an inner lid arranged on a side of a surface where the terminals of the plurality of energy storage devices are located,
a plurality of the bus bars are arranged to be individually connected to the terminals of the plurality of energy storage devices,
the circuit board is electrically connected to at least one of the plurality of bus bars,
the at least one of the plurality of bus bars has:
a flexible portion that is continuous with the bus bar body and is elastically deformable; and
a fixed portion that is continuous with the flexible portion and is fixed to the inner lid, and
the board connecting part is continuous with the fixed portion and is fixed and electrically connected to the circuit board,.

7. The energy storage apparatus according to claim 6, wherein
the bus bar body, the flexible portion, the fixed portion, and the board connecting part are integrally formed of a same material, and
the bus bar body, the flexible portion, and the fixed portion are formed in a same plane.

8. The energy storage apparatus according to claim 7, wherein
the flexible portion and the fixed portion are adjacent to the bus bar body in a direction intersecting an arrangement direction of the energy storage devices, the flexible portion and the fixed portion being aligned in the arrangement direction, and
between the flexible portion and the fixed portion, a slit extending in a direction away from the bus bar body is formed.

9. The energy storage apparatus according to any one of claims 6 to 8, wherein the board connecting part protrudes in a direction intersecting a surface of the fixed portion.

10. The energy storage apparatus according to any one of claims 6 to 9, wherein
the fixed portion is provided with a locking hole, and
the inner lid is provided with a locking protrusion that is locked in the locking hole.

11. The energy storage apparatus according to any one of claims 6 to 10, wherein
the energy storage device has a prismatic case in which the terminal is arranged on one surface, and a gas release valve is provided on the one surface of the prismatic case, and
the flexible portion protrudes, with respect to the bus bar body, in a direction away from the gas release valve.
